# DEMANDE DE BREVET EUROPEEN

(11) **EP 1 911 508 A2**
(43) Date de publication de la demande: **16.04.2008**
(21) Numéro de dépôt: 07301442.5
(22) Date de dépôt: 08.10.2007
(51) Int. Cl.: B01D 53/94, B01D 53/90, F01N 3/20, B01D 53/04

(54) **Système de traitement d'oxydes d'azote avec système de piégeage d'ammoniac**

(30) Priorité: 13.10.2006 WO PCT/FR2006/054253
(71) Demandeur: Peugeot Citroen Automobiles SA, 78943 Vélizy-Villacoublay Cedex (FR)
(72) Inventeur: Sassi, Alain, 78180, Montigny le Bretonneux (FR); Audouin, Arnaud, 75018, Paris (FR)
(74) Mandataire: Pinchon, Odile

(57) **Abrégé**

L'invention se rapporte à un système de traitement d'oxydes d'azote à réduction catalytique sélective, dite SCR, destiné à être installé dans la ligne d'échappement du moteur d'un véhicule, le traitement consistant à réduire chimiquement, dans un catalyseur, dit catalyseur SCR (12), les oxydes d'azote en ajoutant de l'ammoniac contenu dans de l'urée liquide, pure ou en solution, cette urée liquide (14) étant stockée dans un réservoir spécifique (16) destiné à être installé dans le véhicule, et le système comprenant un piège à ammoniac (17) situé en aval du réservoir d'urée, pour piéger les vapeurs d'ammoniac émises lors d'une décomposition de l'urée dans le réservoir.

## Description

La présente invention concerne un système de traitement par réduction catalytique sélective d'oxydes d'azote, dit système SCR, dans lequel on fait en sorte de limiter les rejets d'ammoniac dans l'atmosphère.

Il est connu, notamment pour les véhicules de type poids lourd, d'utiliser des systèmes SCR pour le traitement des oxydes d'azote se trouvant dans la ligne d'échappement des véhicules.

Le principe d'un tel système est de réduire chimiquement les oxydes d'azote NOx en ajoutant un agent réducteur, tel que de l'ammoniac NH₃, en amont d'un catalyseur spécifique, dit catalyseur SCR. Un tel système permet aux véhicules, notamment ceux équipés de moteurs diesels, de respecter les niveaux d'émission légalement tolérés, ces niveaux étant de plus en plus bas.

Un tel principe de réduction est bien connu dans l'industrie, notamment dans des usines stationnaires pour lesquelles il ne se pose aucun problème pour stocker l'ammoniac. En revanche, appliqué à l'automobile, un tel traitement nécessite un stockage de l'ammoniac dans un réservoir spécifique, installé dans le véhicule, et dans lequel l'ammoniac est stocké sous différentes formes.

Une des formes de stockage la plus courante est le stockage sous forme d'urée liquide en solution.

Dans ce cas, le principe de la technologie SCR est d'injecter la solution d'urée en amont du catalyseur SCR. Ainsi, dans l'échappement, il y a d'abord évaporation de l'eau contenue dans la solution, puis décomposition de l'urée en ammoniac.

Cette réaction de décomposition de l'urée s'effectue en deux étapes successives ; d'une part, une étape de thermolyse de l'urée sous la forme de la réaction chimique :

(NH₂)₂CO -> HNCO + NH₃,

d'autre part une étape d'hydrolyse de l'acide isocyanique HNCO créé lors de la thermolyse, avec la réaction chimique :

HNCO + H₂O → NH₃ + CO₂ ,

On peut constater, au vu de la première réaction chimique, que la décomposition de l'urée s'effectue sans apport de composant additionnel. En conséquence, l'urée sous forme de solution aqueuse présente la caractéristique d'être relativement instable, puisque, en fonction de la température, la réaction de décomposition peut s'effectuer dans le réservoir d'urée, notamment si la température devient trop élevée. Dans ce cas, l'urée se décompose en ammoniac dans le réservoir, et cet ammoniac créé s'évapore dans l'air du réservoir. L'ammoniac étant un gaz toxique et odorant, son évaporation dans l'air représente un inconvénient important, notamment dans le cas où un véhicule est exposé à des températures élevées, créant un dégagement important d'ammoniac. Un tel dégagement est particulièrement gênant dans le cas d'un véhicule particulier qui roule peu. En effet, lorsque le véhicule est en mouvement, les gaz sont rapidement dissous dans l'atmosphère, et sont donc peu dérangeants pour les utilisateurs du véhicule, ce qui n'est pas le cas lorsque le véhicule est à l'arrêt. C'est notamment pour cette raison que ce dégagement possible n'est pas pris en compte dans le cadre des systèmes SCR installés sur des véhicules poids lourds, car ces véhicules sont, la plupart du temps, en mouvement.

L'invention vise donc à remédier, au moins en partie, à cet inconvénient, en piégeant l'ammoniac issu de la décomposition de l'urée dans le réservoir.

En particulier, l'invention concerne un système de traitement d'oxydes d'azote à réduction catalytique sélective, dite SCR, destiné à être installé dans la ligne d'échappement du moteur d'un véhicule, le traitement consistant à réduire chimiquement, dans un catalyseur, dit catalyseur SCR, les oxydes d'azote en injectant de l'ammoniac sous forme d'urée liquide, pure ou en solution, cette urée liquide étant stockée dans un réservoir spécifique destiné à être installé dans le véhicule, et le système comprenant un piège à ammoniac gazeux situé en aval du réservoir d'urée, pour piéger les vapeurs d'ammoniac émises lors d'une décomposition de l'urée dans le réservoir.

Le piège à ammoniac, situé en aval du réservoir, peut être relié directement avec l'extérieur. Dans ce cas, il est utile que le système comprenne une vanne anti-retour, situé en aval du piège à ammoniac, et destinée à empêcher l'entrée dans le piège de composants extérieurs, par exemple de l'eau ou des hydrocarbures, et à permettre uniquement un transfert gazeux du piège vers l'extérieur. En effet, les composants extérieurs peuvent polluer le piège, et ainsi le rendre moins efficace. Par ailleurs, dans certaines réalisations du système, on souhaite pouvoir réutiliser l'ammoniac stocké dans le piège, et il faut donc que cet ammoniac ne soit pas contaminé par des composants extérieurs.

Par ailleurs, en fonctionnement normal, c'est à dire lorsqu'il n'y a pas d'évaporation excessive d'ammoniac dans le réservoir d'urée, il n'est pas nécessaire de prévoir un transfert gazeux vers le piège à ammoniac. A cet effet, dans une réalisation, le système est tel que le transfert gazeux en provenance du piège à ammoniac via la vanne est autorisé uniquement lorsque la pression du gaz est supérieure à une valeur prédéterminée, par exemple 50 millibars.

Ainsi, en fonctionnement normal, la vanne est fermée, et le réservoir est parfaitement étanche.

Ainsi que mentionné précédemment, on peut, dans certaines réalisations, souhaiter réutiliser l'ammoniac enfermé dans le piège. Par exemple, on peut souhaiter injecter cet ammoniac dans la ligne d'échappement du moteur afin qu'il soit utilisé pour la réduction des oxydes d'azote dans le catalyseur SCR. A cet effet, dans une réalisation, la sortie du piège à ammoniac est reliée à l'échappement du véhicule, en amont du catalyseur SCR.

Le piège à ammoniac contient des matériaux permettant d'adsorber les molécules d'ammoniac, ces matériaux étant compris dans le groupe comprenant : des charbons actifs, des zéolithes, des alumines activées, des gels de silice et des argiles activées.

Chacun de ces matériaux présente des caractéristiques permettant de stocker les molécules d'ammoniac :

Les charbons actifs sont des éléments préparés par pyrolyse d'une matière contenant du carbone, du charbon ou autre matériau végétal. Au cours de cette pyrolyse il y a création de charbon de bois, qui est ensuite oxydé par la vapeur d'eau dans des conditions contrôlées de manière à obtenir une structure microporeuse. Il existe plusieurs centaines de qualités de charbons actifs, qui diffèrent selon le précurseur, c'est à dire la matière initialement utilisée, et les conditions de traitement. Il existe également des charbons actifs dits chimiques, qui sont activés à chaud par la présence d'agents chimiques déshydratants, de l'acide phosphorique ou du chlorure de zinc. Les charbons actifs sont des adsorbants organophiles amorphes, ce qui signifie que leur structure n'est pas régulière, et présente une répartition continue de taille de pores dont l'étalement peut atteindre plusieurs ordres de grandeur.

Les zéolithes sont des alumino-silicates cristallisés microporeux de formule globale (AlO₂M, nSiO₂), où M représente le plus souvent un métal alcalin ou alcalino-terreux et n ≥ 1. Il existe plus de cent espèces de zéolithes, qui diffèrent par la valeur de n et la structure cristallographique. La présence de cations dans les micropores génère des champs électriques de l'ordre de 10¹⁰ V.m⁻¹, ce qui fait de ces corps de puissants adsorbants polaires.

Les alumines activées sont des éléments obtenus par thermolyse flash du trihydroxyde d'aluminium Al(OH)₃ qui conduit à un produit de composition approximative Al₂O₃, 0.5H₂O. Ce produit de composition présente une structure poreuse, résultant du départ des molécules d'eau. La surface des pores est couverte de groupements Al-H, et l'adsorption est préférentiellement effectuée par liaison hydrogène. Les alumines activées sont des adsorbants amorphes, moyennement polaires et hydrophiles.

Les gels de silice sont préparés à partir de Si(OH)4 en phase aqueuse, obtenu par acidification d'un silicate de sodium, ou bien à partir d'un sol de silice, ou encore par hydrolyse d'un alcoxy-silane. La solution fluide ainsi obtenue polymérise rapidement, ce qui permet d'obtenir un gel qui conserve une structure lâche après rinçage et séchage. Les groupements Si-OH conduisent à des liaisons hydrogène. Il existe deux types de gels de silice : les gels microporeux, qui sont relativement hydrophiles, ou les gels macroporeux, qui sont versatiles. Comme leur nom l'indique, ces gels diffèrent les uns des autres par la taille des pores.

Les argiles activées, quant à elles, sont des alumino-silicates ayant une formule brute proche des zéolithes, mais dont la structure cristalline est différente.

Une des caractéristiques communes à tous ces matériaux est le fait que, lorsqu'ils sont chauffés, on assiste à un phénomène de désorption, c'est à dire que les molécules piégées dans leurs pores, par exemple des molécules d'ammoniac, sont relâchées.

Cette caractéristique peut être particulièrement utile pour régénérer le piège, c'est à dire pour le vider. En effet, pour que le piège conserve son efficacité de stockage, il est nécessaire d'éliminer régulièrement l'ammoniac et l'eau stockés dans les pores des matériaux adsorbants présents dans le piège. Pour cela, dans une réalisation, le piège à ammoniac est équipé d'un dispositif de chauffage permettant une désorption de l'ammoniac par les matériaux présents dans le piège à ammoniac, et donc une régénération du piège par rejet des molécules d'ammoniac.

Cette régénération du piège correspond donc à un dégazage de l'ammoniac.

Dans le cas où le piège à ammoniac est relié directement à l'extérieur, il ne faut pas que la régénération ait lieu lorsque le véhicule est à l'arrêt. En effet, un tel phénomène conduirait à une gêne importante pour les utilisateurs, gêne que cherche justement à éviter le système décrit ici. Pour éviter ce dégazage intempestif, le système comprend des moyens pour que le dispositif de chauffage ne soit mis en marche que lorsque le véhicule se déplace à une vitesse supérieure à une vitesse prédéterminée.

En effet, ainsi que mentionné précédemment, lorsque le véhicule roule suffisamment vite, les gaz relâchés sont dissous rapidement dans l'atmosphère, et ne sont donc pas gênants pour les utilisateurs du véhicule.

Cette mise en marche du dispositif de chauffage uniquement lorsque le véhicule roule à une certaine vitesse est également utile dans le cas où la sortie du piège à ammoniac est reliée à la ligne d'échappement du moteur en amont du catalyseur. En effet, dans cette configuration, la régénération du piège à ammoniac est effectuée pendant une phase de fonctionnement du véhicule, c'est à dire pendant une phase où des oxydes d'azote sont présents dans l'échappement. Dans ce cas, le système comprend des moyens pour que l'ammoniac issu de la régénération soit immédiatement utilisé pour la réduction des oxydes d'azote dans le catalyseur SCR.

Si, en revanche, le système est tel que la sortie du piège à ammoniac est reliée à la ligne d'échappement du moteur en amont du catalyseur et que la régénération du piège à ammoniac est effectuée alors que le véhicule est à l'arrêt, aucun oxyde d'azote n'est créé, et l'ammoniac ne peut donc pas être consommé pour la réduction de ces oxydes. Dans ce cas, il est utile de pouvoir stocker cet ammoniac.

A cet effet, dans une réalisation, le système comprend des moyens pour que l'ammoniac issu de la régénération soit stocké dans le catalyseur SCR, par exemple dans des zéolithes, en vue d'une utilisation ultérieure pour la réduction des oxydes d'azote.

La quantité de matière chimique, telle que des zéolithes, des charbons actifs ou autre, contenue dans le piège à ammoniac et nécessaire pour piéger tout l'ammoniac issu du réservoir d'urée dépend de la fréquence de régénération du piège.

Par exemple, dans le cas où le piège n'est jamais régénéré, il est nécessaire que le piège contienne environ 2 kilogrammes de matière chimique pour adsorber les molécules d'ammoniac.

En effet, si on considère que, dans les conditions les plus sévères en température, de l'urée contenue dans un réservoir de 25 litres est convertie en ammoniac gazeux et que la capacité de stockage en ammoniac de la zéolithe est de l'ordre de 20 moles par kilogrammes, alors on constate, en tenant compte de la masse molaire des zéolithes, qu'il est nécessaire de disposer d'environ 2 kilogrammes de zéolithes pour éviter toute émission d'ammoniac NH₃ vers l'extérieur du véhicule.

En revanche, dans le cas où on effectue des régénérations régulières du piège à ammoniac, 500 grammes de matière chimique peuvent être suffisants pour adsorber les molécules d'ammoniac.

L'invention concerne également un véhicule automobile comprenant un système tel que décrit précédemment.

D'autres caractéristiques et avantages de l'invention apparaîtront avec la description de certains de ses modes de réalisation, cette description étant réalisée à titre non limitatif à l'aide des figures sur lesquelles :
- la figure 1 représente un système de traitement d'oxydes d'azote conforme à l'invention,
- la figure 2 montre l'évolution de la concentration en urée d'une solution aqueuse d'urée, pour différentes températures,
- la figure 3 montre la capacité de stockage d'une zéolithe en fonction de la température, et
- la figure 4 montre les capacités d'adsorption de différents types de matériaux.

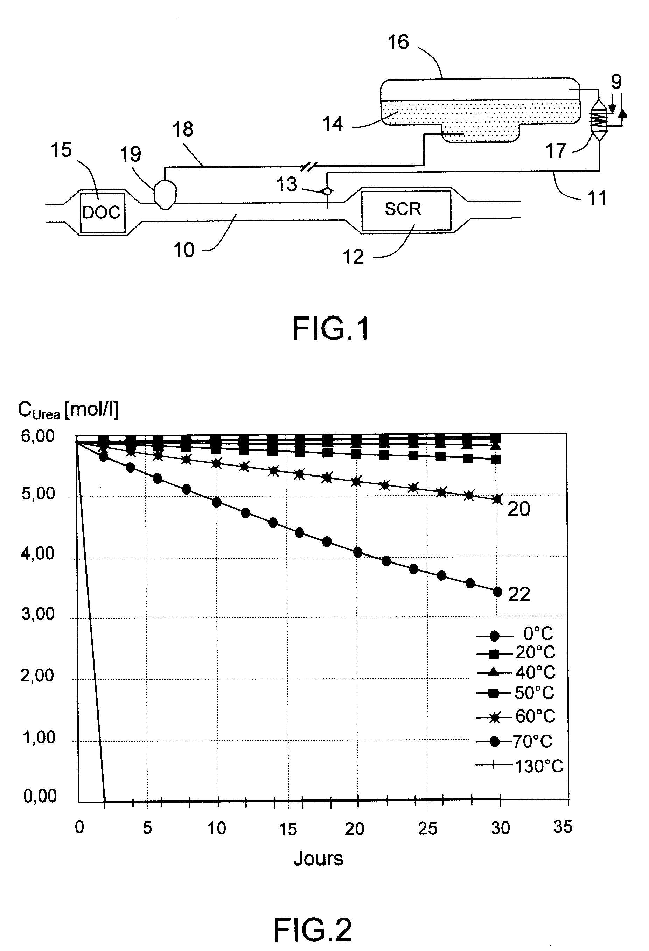

La figure 1 montre un système de traitement d'oxydes d'azote présents dans la ligne d'échappement 10 d'un moteur de véhicule, notamment de type Diesel. Ces oxydes d'azote sont dirigés vers un catalyseur spécifique SCR 12, dans lequel est effectuée une réduction chimique. Pour que cette réduction ait lieu, il est nécessaire d'ajouter aux oxydes d'azote de l'ammoniac, par exemple contenu dans de l'urée liquide 14. Cette urée liquide est généralement stockée dans un réservoir spécifique 16 installé dans le véhicule. Ce réservoir 16 est relié, via un conduit d'alimentation 18, à un injecteur spécifique 19, permettant d'injecter l'urée 14 dans la ligne d'échappement 14 du moteur.

Lorsque le véhicule dans lequel est installé ce système est exposé à des températures élevées, par exemple s'il reste garé au soleil pendant une durée relativement longue, la température à l'intérieur du réservoir augmente rapidement. Cette augmentation de température a pour conséquence une décomposition lente de l'urée, notamment illustrée sur la figure 2.

Sur cette figure, les courbes 20 et 22 représentent l'évolution dans le temps de la concentration en urée dans l'eau, lorsqu'une solution d'urée est exposée à des températures respectives de 60°C et 70°C. Ces températures, qui paraissent élevées pour des températures ambiantes, sont pourtant facilement atteignables dans un moteur de véhicule exposé en plein soleil pendant plusieurs heures.

On constate, sur ces deux courbes, que la concentration en urée dans l'eau diminue progressivement au fil des jours ; ainsi, après 5 jours à 70°C, la concentration est déjà passée de 6 moles par litres initialement à 5 moles par litres ; après 10 jours à 60°C, la concentration n'est plus que de 5,50 moles par litre, pour la même concentration initiale de 6 moles par litre.

L'urée 14 décomposée est transformée en ammoniac qui s'évapore dans l'air du réservoir 16. L'ammoniac étant un gaz toxique et odorant, il peut être gênant de laisser le réservoir à l'air libre. Ainsi, dans un système selon l'invention, on prévoit un piège à ammoniac 17 installé en sortie du réservoir d'urée 16. Ce piège à ammoniac contient des substances chimiques telles que des charbons actifs, des zéolithes, des gels de silice, des alumines activées ou encore des argiles activées, ces substances ayant toute la capacité de stocker des molécules telles que les molécules d'ammoniac. En fonction du type de matière chimique utilisée, les quantités d'ammoniac adsorbées peuvent varier.

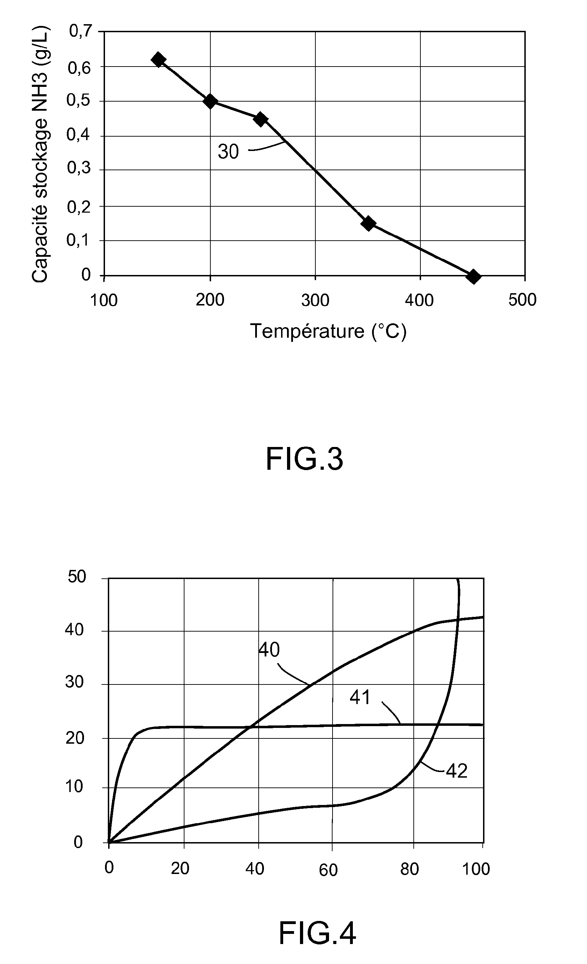

Ces variations apparaissent sur la figure 4, qui représentent, pour trois types de matières chimiques adsorbantes, la capacité d'adsorption en fonction du taux d'humidité, c'est à dire de la quantité de molécules d'eau en présence. Le taux d'humidité est représenté en pourcentage sur l'axe des abscisses, et la capacité d'adsorption est représentée en kilogrammes d'eau adsorbés par 100 kilogrammes d'adsorbant.

Sur cette figure, les courbes 40, 41 et 42 correspondent aux capacités d'adsorption respectives d'une zéolithe, d'un gel de silice microporeux et d'un gel de silice macroporeux. On constate que ces trois matériaux ont des capacités relativement différentes en fonction des conditions d'humidité du milieu. Ainsi, pour un faible taux d'humidité, c'est à dire inférieur à 20%, le gel de silice microporeux est le plus efficace, alors que pour un fort taux d'humidité, par exemple supérieur à 80%, c'est le gel de silice macroporeux qui offre les meilleurs résultats.

En ce qui concerne la zéolithe c'est un matériau relativement efficace quel que soit le taux d'humidité du milieu, et donc quelle que soit la quantité de molécules d'eau à adsorber.

Après que les molécules d'ammoniac aient été stockées dans le piège à ammoniac, il peut être utile de pouvoir régénérer le piège, en le vidant.

Pour cela, le piège à ammoniac est muni d'un dispositif de chauffage 9. En effet, les matériaux chimiques utilisés pour piéger l'ammoniac sont tels que lorsqu'ils sont soumis à une température élevée, par exemple supérieure à 200°C, il se produit une désorption, c'est à dire une libération des molécules stockées dans les pores de ces matériaux. Ainsi, les molécules d'ammoniac sont relâchées.

Dans une réalisation, il peut être utile d'utiliser ces molécules d'ammoniac désorbées pour la réduction des oxydes d'azote.

Dans ce cas, on prévoit un tube de retour 11 reliant la sortie du piège à ammoniac à la ligne d'échappement 10 du moteur. En outre, afin d'éviter que les gaz présents dans cette ligne d'échappement 10 ne remontent vers le piège à ammoniac 17, on prévoit une vanne anti-retour 13 située dans le tube de retour 11.

Cette vanne 13 est telle qu'elle ne s'ouvre que dans le sens piège à ammoniac => ligne d'échappement, lorsque la pression devient supérieure à une valeur prédéterminée. Cette valeur peut être, en fonction du type de vanne utilisé, de l'ordre de 50 millibars ou de 100 millibars.

Les molécules d'ammoniac, transférées dans la ligne d'échappement 10, sont alors piégées dans une zone fermée située entre le catalyseur d'oxydation 15 et le catalyseur SCR 12.

L'ammoniac est donc dirigé naturellement vers le catalyseur 12. Si le véhicule est en fonctionnement à cet instant, cela signifie que des oxydes d'azote sont présents dans la ligne d'échappement 10, et l'ammoniac est alors consommé directement dans le catalyseur 12, pour la réduction de ces oxydes d'azote.

En revanche, si le véhicule est à l'arrêt, il peut être utile de stocker les molécules d'ammoniac pour une utilisation ultérieure. A cet effet, le catalyseur 12 contient des zéolithes, ayant la capacité de stocker de l'ammoniac. Cette capacité de stockage est illustrée sur la figure 3. Sur cette figure, la courbe 30 représente l'évolution de la capacité de stockage, exprimée en gramme d'ammoniac NH3 par litre, en fonction de la température.

Ainsi, on constate que pour une température de 150°C, la capacité de stockage est supérieure à 0.6 grammes par litre. Sur cette figure ne sont représentés que des points pour des températures supérieures à 150°C, mais il est connu que les zéolithes sont très efficaces pour stocker l'ammoniac aux températures ambiantes. En conséquence, pour des quantités faibles d'ammoniac dans les gaz, cet ammoniac est entièrement stocké dans le catalyseur SCR.

Un des avantages du dispositif de chauffage 9 est qu'on peut contrôler le moment auquel à lieu la désorption, et ainsi faire en sorte que cette désorption ait lieu pendant une phase de roulage du véhicule, de manière à pouvoir consommer aussitôt l'ammoniac relâché.

Dans certains réalisations, on peut ne pas souhaiter réutiliser l'ammoniac issu du réservoir d'urée. Dans ce cas, le piège à ammoniac 17 n'est pas relié à la ligne d'échappement du moteur, mais directement à l'extérieur.

Dans ce cas, on active généralement le dispositif de chauffage 9 lorsque le véhicule a atteint une certaine vitesse, de manière que l'ammoniac soit relâché et dispersé aussitôt dans l'atmosphère, sans qu'il y ait création d'une gêne pour les utilisateurs du véhicule ou des personnes qui pourraient se trouver dans un environnement proche de ce véhicule.

Dans cette réalisation, il peut être utile de placer en sortie du piège une vanne anti-retour, semblable à la vanne anti-retour 13, afin d'éviter une contamination du piège à ammoniac par des éléments extérieurs tels que de l'eau ou des hydrocarbures.

## Revendications

1. Système de traitement d'oxydes d'azote à réduction catalytique sélective, dite SCR, destiné à être installé dans la ligne d'échappement du moteur d'un véhicule, le traitement consistant à réduire chimiquement, dans un catalyseur, dit catalyseur SCR, les oxydes d'azote en injectant de l'ammoniac sous forme d'urée liquide, pure ou en solution, le système comprenant un réservoir d'urée liquide relié, d'une part, à un injecteur permettant d'injecter l'urée liquide dans la ligne d'échappement du moteur, et d'autre part à un piège à ammoniac pour piéger les vapeurs d'ammoniac émises lors d'une décomposition de l'urée dans le réservoir, le système étant tel que la sortie du piège à ammoniac est reliée à l'échappement du véhicule en amont du catalyseur SCR.

2. Système selon la revendication 1 comprenant une vanne anti-retour, située en aval du piège à ammoniac, et destinée à empêcher l'entrée dans le piège de composants extérieurs au réservoir d'urée, par exemple de l'eau ou des hydrocarbures, et à permettre uniquement un transfert gazeux du piège vers l'extérieur.

3. Système selon la revendication 2 dans lequel le transfert gazeux en provenance du piège à ammoniac via la vanne est autorisé uniquement lorsque la pression du gaz est supérieure à une valeur prédéterminée, par exemple 50 millibars.

4. Système selon l'une des revendications précédentes, dans lequel le piège à ammoniac contient des matériaux permettant d'adsorber les molécules d'ammoniac, ces matériaux étant compris dans le groupe comprenant : des charbons actifs, des zéolithes, des alumines activées, des gels de silice et des argiles activées.

5. Système selon la revendication 4 dans lequel le piège à ammoniac est équipé d'un dispositif de chauffage permettant une désorption de l'ammoniac par les matériaux présents dans le piège à ammoniac, et donc une régénération du piège par rejet des molécules d'ammoniac.

6. Système selon la revendication 5 comprenant des moyens pour que le dispositif de chauffage soit mis en marche lorsque le véhicule se déplace à une vitesse supérieure à une vitesse prédéterminée.

7. Système selon l'une des revendications précédentes, comprenant des moyens pour que, l'ammoniac issu de la régénération du piège à ammoniac soit immédiatement utilisé pour la réduction des oxydes d'azote dans le catalyseur SCR.

8. Système selon la revendication 8 comprenant des moyens pour que, dans le cas où le véhicule est à l'arrêt, l'ammoniac issu de la régénération du piège à ammoniac est stocké dans le catalyseur SCR, par exemple dans des zéolithes, en vue d'une utilisation ultérieure pour la réduction des oxydes d'azote.

9. Système selon l'une des revendications précédentes dans lequel, dans le cas où le piège n'est jamais régénéré, ce piège contient environ 2 kilogrammes de matière chimique pour adsorber les molécules d'ammoniac.

10. Système selon l'une des revendications 1 à 9 dans lequel, dans le cas où on effectue des régénérations régulières du piège à ammoniac, ce piège contient environ 500 grammes de matière chimique pour adsorber les molécules d'ammoniac.
